**Europäisches Patentamt**

**European Patent Office**

**Office européen des brevets**

(11) Veröffentlichungsnummer:

**0 049 213**
**A1**

(12) **EUROPÄISCHE PATENTANMELDUNG**

(21) Anmeldenummer: 81730088.2

(22) Anmeldetag: 01.09.81

(51) Int. Cl.³: **H 04 M 3/62,** H 04 Q 3/00

(30) Priorität: 30.09.80 DE 3037360

(43) Veröffentlichungstag der Anmeldung: **07.04.82**
**Patentblatt 82/14**

(84) Benannte Vertragsstaaten: **AT BE CH FR GB IT LI NL SE**

(71) Anmelder: **SIEMENS AKTIENGESELLSCHAFT Berlin**
**und München, Postfach 22 02 61,**
**D-8000 München 22 (DE)**

(72) Erfinder: **Achmüller, Andreas, Ing.grad,**
**Oberstdorferstrasse 12, D-8000 München 71 (DE)**
Erfinder: **Scholz, Dieter, Weilbachstrasse 12,**
**D-8061 Prittlbach (DE)**

(54) Schaltungsanordnung für zentralgesteuerte Fernsprechanlagen, insbesondere Fernsprechnebenstellenanlagen und private Fernsprechsonderanlagen, mit Tasten von Vermittlungsplätzen zugeordneten Identitätskennungen.

(57) Die Erfindung betrifft eine Schaltungsanordnung für zentralgesteuerte Fernsprechanlagen, insbesondere Fernsprechnebenstellenanlagen und private Fernsprechsonderanlagen, mit zumindest einem Vermittlungsplatz, der über eine Verbindungsleitung mit digitale Informationen empfangenden und sendenden zentralen bzw. dezentralen Einrichtungen verbunden ist. Der Vermittlungsplatz (VPL) enthält eine Abtast-Einrichtung (SCN), die aus dem Arbeitsspeicher (MU) und dem veränderbaren Datenspeicher (DM) für die Adressen- und Funktionszuordnung von am Vermittlungsplatz (VPL) vorhandenen Tasten (DA1, DAX) gebildet ist. Die Tastenzustandsänderung wird in eine Tastenidentitätskennung umgewandelt und zwecks Steuerung einer Funktions- bzw. Wahlinformation innerhalb der Fernsprechanlage der Informationsverarbeitungseinrichtung (MC) übertragen.

Derartige Schaltungsanordnungen werden insbesondere für Flugsicherungsanlagen eingesetzt.

SIEMENS AKTIENGESELLSCHAFT
Berlin und München

Unser Zeichen
VPA 80 P 6421 E

Schaltungsanordnung für zentralgesteuerte Fernsprechanlagen, insbesondere Fernsprechnebenstellenanlagen und private Fernsprechsonderanlagen, mit Tasten von Vermittlungsplätzen zugeordneten Identitätskennungen

Die Erfindung betrifft eine Schaltungsanordnung für zentralgesteuerte Fernsprechanlagen, insbesondere Fernsprechnebenstellenanlagen und private Fernsprechsonderanlagen, mit zumindest einem Vermittlungsplatz, der über eine Verbindungsleitung mit digitalen Informationen empfangenden und sendenden zentralen bzw. dezentralen Einrichtungen verbunden ist und dem für die Umsetzung von digital zu empfangenden und zu sendenden Informationen entsprechende Codeumsetzer und für den Empfang und für das Senden von Informationen entsprechende Speicher und Auswertemittel zugeordnet sind.

Derartig definierte Fernsprechanlagen sind vielfach für Fernsprechsondernetze vorgesehen, bei denen die Teilnehmereinrichtungen neben ihrer Funktion als in ankommender und abgehender Verkehrsrichtung betriebene Fernsprecheinrichtungen zusätzlich vermittlungstechnische Aufgaben erfüllen müssen. Die Teilnehmereinrichtungen stellen somit Vermittlungsplätze dar, die beispielsweise in der Energieversorgungsunternehmen die Wartungsplätze von Schaltanlagen überwachen. Je nach Struktur und Erfordernis einer derartigen Fernsprechanlage können sowohl die einzelnen Vermittlungsplätze untereinander als auch die von den Vermittlungsplätzen anschaltbaren Verbindungsleitungen verschiedene Berechtigungen aufweisen.

Kem 3 Sby / 17.09.1980

Bestimmte Fernsprechanlagen sind so organisiert, daß diese Berechtigungen durch manuell von den Bedienungspersonen der Vermittlungsplätze steuerbaren Schaltvorgänge eingeleitet werden. Bekannt sind in diesem Zusammenhang Schaltmaßnahmen, die die Berechtigungen direkt in die Verbindungsleitungs- oder Vermittlungsplatzübertragungseinrichtungen übertragen und von dort aus durch die üblichen Such- und Identifiziervorgänge beim weiteren Verbindungsaufbau berücksichtigen. Je nach der Funktion und den zu steuernden Schaltvorgängen sind die Tasten mit unterschiedlichen Kontaktkombinationen versehen, die außerdem zur Einhaltung bestimmter Kontaktschaltfolgen mit einer Sonderjustage versehen sein können.

Die der Erfindung zugrunde liegende Aufgabe besteht darin, einerseits unabhängig von der Funktion der Tasten als Berechtigungs-, Vermittlungs- oder Anschaltetaste für die Tasten insgesamt einen einheitliche Kontaktsatz vorzusehen und andererseits die Schaltvorgänge zur Erkennung und Auswertung dieser Kriterien zu vereinheitlichen. Erfindungsgemäß wird dies dadurch erreicht, daß dem Vermittlungsplatz zumindest eine einen Arbeitsspeicher und einen veränderbaren Datenspeicher für die Adressen- und Funktionszuordnung von am Vermittlungsplatz vorhandenen Tasten enthaltende Abtast-Einrichtung zugeordnet ist, die eine von dem Vermittlungsplatz verursachte Tastenzustandsänderung in eine Tastenidentitätskennung umwandelt und diese zwecks Steuerung einer Funktions- bzw. Wahlinformation innerhalb der Fernsprechanlage einer Informationsverarbeitungseinrichtung überträgt.

Als wesentlich für die Erfindung ist anzusehen, daß dem Vermittlungsplatz ein von den Funktionen unabhängiger Tastensatz mit der benötigten Anzahl von Tasten zur
Verfügung steht, die bei ihrer Betätigung, d. h. mit
der Tastenzustandsänderung, innerhalb der Abtasteinrichtung eine Tastenidentitätskennung hinterlassen,
die dann innerhalb der Fernsprechanlage der Informationsverarbeitungseinrichtung übertragen und zur Steuerung
weiterer Funktionsabläufe herangezogen werden kann.

Für Vermittlungsplätze, die aufgrund ihrer Funktion
innerhalb der Fernsprechanlagen besonders viele Tasten
aufweisen, ergeben sich erhebliche Einsparungen im Hinblick auf die Ausführung des Verbindungskabels zwischen
dem eigentlichen Vermittlungsplatz und der Anlage.

Die Erfindung wird in einem figürlich dargestellten
Ausführungsbeispiel näher erläutert, indem lediglich
die zum Verständnis der Erfindung notwendigen Schalteinrichtungen dargestellt sind.

Dem Vermittlungsplatz VPL sind die Tasten DA1 bis DAX
zugeordnet, deren nicht bezeichnete Lampen mit den entsprechenden Lampentreiberstufen DAA1 bis DAAX verbunden
sind. Des weiteren sind die Tasten DA1 bis DAX über
eine gemeinsame, nicht bezeichnete Steuerleitung mit
der Abtasteinrichtung SCN verbunden, die u. a. den Arbeitsspeicher MU und den veränderbaren Datenspeicher
DM aufweist. Die Abtast-Einrichtung SCN sowie auch die
Lampentreiberstufen DAA 1 und DAAX stehen über eine
ebenfalls nicht bezeichnete Verbindungsleitung mit der
Informationsverarbeitungseinrichtung MC in Verbindung.

Die Tasten DA1 bis DAX des Vermittlungsplatzes VPL können je nach Bedarf unterschiedlichste Funktionen ausführen. Bei dem Betätigen einer Taste DA1 bzw. DAX durch die Bedienungsperson des Vermittlungsplatzes VPL wird von der Abtast-Einrichtung SCN die Tastenidentitätsnennung beispielsweise in Form einer alpha-numerischen Information erzeugt und in den Arbeitsspeicher MU und den veränderbaren Datenspeicher DM für die Adressen- und Funktionszuordnung abgespeichert. Von der Informationsverarbeitungseinrichtung MC werden diese Adressen- und Funktionszuordnungen zur Steuerung der entsprechend zu verursachenden Schaltvorgänge herangezogen.

Stellt beispielsweise die Taste DA1 eine dem Vermittlungsplatz VPL zugeordnete Berechtigungsveränderungstaste dar, so wird die Tastenzustandsänderung dieser Taste ebenfalls von der Abtast-Einrichtung SCN erkannt und die Tastenidentitätskennung in Form der Funktionszuordnung und der Adressenzuordnung in den Datenspeicher DM und den Arbeitsspeicher MU übertragen und stehen somit ebenfalls der Informationsverarbeitungseinrichtung MC zur Steuerung der weiteren Schaltvorgänge zur Verfügung.

1 Anspruch
1 Figur

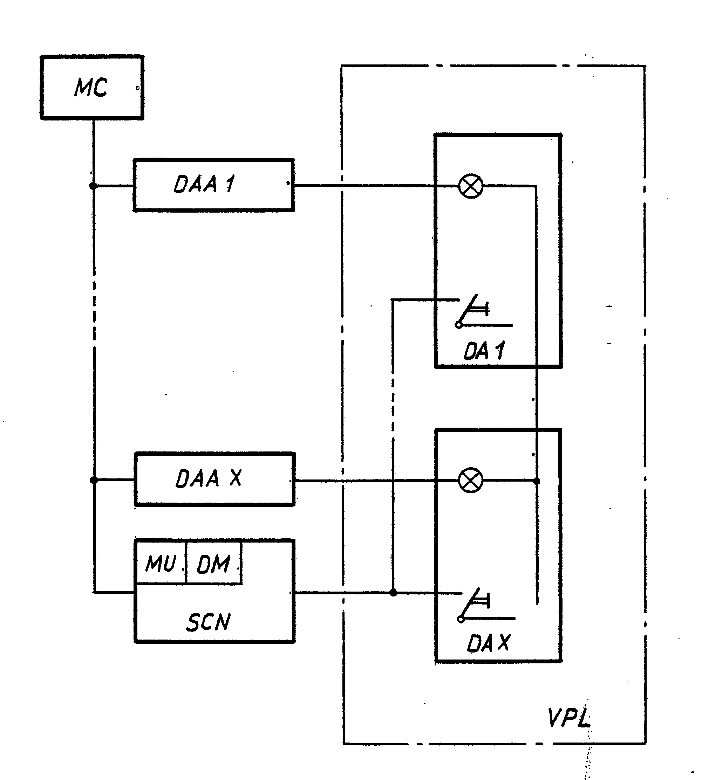

Patentansprüche

1. Schaltungsanordnung für zentralgesteuerte Fernsprechanlagen, insbesondere Fernsprechnebenstellenanlagen und private Fernsprechsonderanlagen, mit zumindest einem Vermittlungsplatz, der über eine Verbindungsleitung mit digitalen Informationen empfangenden und sendenden zentralen bzw. dezentralen Einrichtungen verbunden ist und dem für die Umsetzung von digital zu empfangenen und zu sendenden Informationen entsprechende Codeumsetzer und für den Empfang und für das Senden von Informationen entsprechende Speicher und Auswertemittel zugeordnet sind , d a d u r c h  g e - k e n n z e i c h n e t , daß dem Vermittlungsplatz (VPL) zumindest eine einen Arbeitsspeicher (MU) und einen veränderbaren Datenspeicher (DM) für die Adressen- und Funktionszuordnung von am Vermittlungsplatz vorhandenen Tasten (DA1, DAX) enthaltende Abtast-Einrichtung (SCN) zugeorndet ist, die eine von dem Vermittlungsplatz (VPL) verursachte Tastenzustandsänderung in eine Tastenidentitätskennung umwandelt und diese zwecks Steuerung einer Funktions- bzw. Wahlinfomation innerhalb der Fernsprechanlage einer Informationsverarbeitungseinrichtung (MC) überträgt.

Kem 3 Sz / 17.09.1980

MC

DAA 1

DAA X

MU DM

SCN

DA 1

DA X

VPL

# EUROPÄISCHER RECHERCHENBERICHT

Europäisches Patentamt

Nummer der Anmeldung

EP 81 73 0088

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 741 768 (THE POST OFFICE)<br><br>* Seite 10, Zeile 16 bis Seite 11, Zeile 21; Seite 18, Zeilen 1 bis 9; Seite 25, Zeile 20 bis Seite 26, Zeile 7 *<br><br>-- | 1 |
| | DE - A - 1 908 694 (WESTERN)<br><br>* Seite 9, Zeile 15 bis Seite 10, Zeile 7 *<br><br>-- | 1 |
| A | WO - A - 79/00316 (STROMBERG CARLSON)<br><br>* Seite 4, Zeilen 16-24; Seite 9, Zeile 30 bis Seite 10, Zeile 7 *<br><br>----- | 1 |

**KLASSIFIKATION DER ANMELDUNG (Int. Cl.³)**

H 04 M 3/62
H 04 Q 3/00

**RECHERCHIERTE SACHGEBIETE (Int. Cl.³)**

H 04 M 3/60
        3/62
        3/64
H 04 Q

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 04-01-1982 | VANDEVENNE |

EPA form 1503.1  06.78